(19) Europäisches Patentamt / European Patent Office / Office européen des brevets

(11) **EP 2 956 563 B1**

(12) **FASCICULE DE BREVET EUROPEEN**

(45) Date de publication et mention de la délivrance du brevet:
**01.05.2019 Bulletin 2019/18**

(21) Numéro de dépôt: **14705338.3**

(22) Date de dépôt: **18.02.2014**

(51) Int Cl.:
*C23C 2/26* (2006.01)     *C23C 2/06* (2006.01)
*C23G 1/20* (2006.01)

(86) Numéro de dépôt international:
**PCT/EP2014/053102**

(87) Numéro de publication internationale:
**WO 2014/125117 (21.08.2014 Gazette 2014/34)**

(54) **PROCÉDÉ DE PRÉPARATION D'UNE TÔLE À REVÊTEMENT ZNMG OU ZNALMG COMPRENANT L'APPLICATION D'UNE SOLUTION BASIQUE D'UN AGENT COMPLEXANT LES IONS MAGNÉSIUM.**

VERFAHREN ZUR HERSTELLUNG EINES BLECHS MIT EINER ZNMG- ODER ZNALMG-BESCHICHTUNG MIT EINER BASISCHEN LÖSUNG AUS EINEM MAGNESIUMIONEN-KOMPLEXBILDNER.

METHOD FOR THE PRODUCTION OF SHEET METAL HAVING A ZNMG OR ZNALMG COATING, COMPRISING THE APPLICATION OF A BASIC SOLUTION OF A MAGNESIUM ION COMPLEXING AGENT.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.02.2013 PCT/FR2013/050332**

(43) Date de publication de la demande:
**23.12.2015 Bulletin 2015/52**

(73) Titulaire: **ArcelorMittal**
**1160 Luxembourg (LU)**

(72) Inventeurs:
• **ALLÉLY, Christian**
**F-57283 Maizieres-les-metz Cedex (FR)**
• **MACHADO AMORIM, Tiago**
**F-57283 Maizieres-les-metz Cedex (FR)**
• **COFFIGNY, Astrid**
**F-57283 Maizieres-les-metz Cedex (FR)**

(74) Mandataire: **Lavoix**
**2, place d'Estienne d'Orves**
**75441 Paris Cedex 09 (FR)**

(56) Documents cités:
**EP-A1- 1 857 567     JP-A- 2002 097 559**
**JP-A- 2009 191 317**

**Description**

La présente invention est relative à un procédé de préparation d'une tôle comprenant un substrat présentant deux faces dont au moins l'une est revêtue par un revêtement métallique comprenant du magnésium (Mg), et éventuellement de l'aluminium (Al), le reste étant du zinc (Zn), les impuretés inévitables et éventuellement un ou plusieurs éléments additionnels choisis parmi Si, Sb, Pb, Ti, Ca, Mn, Sn, La, Ce, Cr, Ni ou Bi et à son procédé de préparation.

Ces tôles sont par exemple destinées au domaine de l'automobile, au domaine électroménager ou à la construction.

Elles peuvent être mises en peintures en vue de leur utilisation, notamment à un stade amont de leur production. On parle alors de tôles « prélaquées », celles-ci étant particulièrement destinées au domaine électroménager ou à la construction.

Dans le cas des tôles prélaquées, l'ensemble du procédé de réalisation de telles tôles étant assuré par le sidérurgiste, les coûts et les contraintes liés à la mise en peinture chez les utilisateurs sont diminués.

Les revêtements métalliques comprenant essentiellement du zinc sont traditionnellement utilisés pour leur bonne protection contre la corrosion.

L'ajout de magnésium au revêtement augmente nettement la résistance à la corrosion de ces revêtements, ce qui peut permettre de réduire leur épaisseur ou d'augmenter la garantie de protection contre la corrosion dans le temps. De plus, l'ajout d'aluminium (typiquement de l'ordre de 0,1% en poids) à un revêtement à base de zinc et de magnésium permet également d'améliorer la résistance à la corrosion, et rend la tôle revêtue plus facile à être mise en forme. Ainsi, les revêtements métalliques comprenant essentiellement du zinc sont à présent concurrencés par les revêtements comprenant du zinc, du magnésium et éventuellement de l'aluminium.

Les revêtements métalliques comprenant du zinc et du magnésium seront globalement désignés ici sous le terme de revêtements zinc- magnésium ou ZnMg, et ceux comprenant du zinc, du magnésium et de l'aluminium seront globalement désignés ici sous le terme de revêtements zinc- aluminium- magnésium ou ZnAlMg.

La demande EP 1 857 567 décrit un procédé de préparation de tôle d'acier recouvert par trempé à chaud d'un alliage ZnMgAlFe puis d'un revêtement organique, comprenant notamment les étapes de fournir une tôle en acier, la tremper à chaud pour former un revêtement anti-corrosion à base d'un alliage ZnMgAlFe, la refroidir, puis appliquer un revêtement organique.

Avant d'être utilisées, les tôles revêtues sont généralement soumises à divers traitement de surface.

Pour éviter que les tôles revêtues ne se corrodent lors de leur stockage, on applique généralement sur leur surface un film de graisse ou d'huile. Avant d'utiliser les tôles revêtues et de les traiter en surface, les tôles sont généralement dégraissées, usuellement par application d'une solution basique. Cette étape de dégraissage est généralement réalisée quel que soit le traitement de surface ultérieur.

Divers traitements de surface de tôles revêtues sont connus de la littérature. Leurs rôles sont de protéger les tôles revêtues de la corrosion et/ou d'améliorer leurs propriétés, notamment l'adhérence des revêtements organiques minces (ROM) (en anglais « thin organic coating » TOC), de peinture, de laque et/ou d'adhésif sur les tôles revêtues. Les traitements de surface les plus usuels sont les suivants :

- l'oxydation alcaline, lors de laquelle une solution de traitement composée d'un mélange d'ions métalliques, généralement du cobalt, typiquement Fe/Co ou Co/Ni, est appliquée. Le principe de ce traitement est d'effectuer un léger décapage de la surface par attaque des oxydes superficiels d'aluminium et de zinc, celui-ci étant suivi du dépôt d'oxydes amorphes.

Par exemple, la demande JP 2002/097559 décrit une tôle en acier revêtue par un alliage ZnAlMg recouvert par un film noir comprenant du cobalt, du zinc, de l'aluminium, du magnésium et de l'oxygène, la tôle étant obtenue en appliquant, sur une tôle recouverte dudit alliage, une solution aqueuse basique comprenant un acide organique, du sulfate d'ammonium et des ions cobalt.

- le traitement de conversion chimique, par exemple par phosphatation ou par chromatation. Ce traitement est toujours réalisé à pH acide pour permettre la dissolution d'une partie du zinc en surface en ions $Zn^{2+}$ susceptibles de réagir avec la solution de conversion (typiquement un acide carboxylique tel que l'acide oxalique pour une chromatation, ou l'acide phosphorique pour une phosphatation) pour former une couche protectrice sur le revêtement (par exemple d'oxalate de zinc ou de phosphates).

Par exemple, la demande EP 2 458 031 décrit un procédé de traitement d'une surface métallique par une solution de traitement de conversion chimique pour améliorer sa résistance à la corrosion et la capacité d'adhérence de revêtements, ladite solution comprenant :

- (A) un composé à base de titane ou de zirconium hydrosoluble, et
- (B) un composé organique comprenant 2 à 3 groupes fonctionnels, notamment la glycine, en tant qu'agent stabilisant le composé (A),

et son pH étant compris entre 2,0 et 6,5. Un pH supérieur est déconseillé car l'élimination d'oxydes de la surface métallique serait alors défavorisée et la résistance à la corrosion serait réduite.

- la cataphorèse (« e-coat » en anglais) qui permet de déposer des particules de peinture sur la surface de la tôle revêtue.

Par ailleurs, la demande JP 2009/191317 décrit un procédé de préparation d'une tôle facile à dégraisser comprenant les étapes de laminer une tôle obtenue par trempé à chaud, par exemple une tôle revêtue d'un alliage ZnAlMg, la mettre en contact avec une solution aqueuse comprenant du pyrophosphate de pH 6 à 12, la sécher, éventuellement appliquer une huile.

Or, il a été observé que, malgré ces traitements de surface, les revêtements Zn-Mg ou Zn-Al-Mg ne résistent pas toujours suffisamment à la corrosion et/ou que les revêtements organiques minces ou peintures recouvrant des revêtements Zn-Mg ou Zn-Al-Mg se détérioraient, en particulier par apparition de cloques (« blistering » en anglais).

Il existe donc un besoin d'améliorer :

- la résistance à la corrosion de tôles revêtues de Zn-Mg ou Zn-Al-Mg, et/ou
- l'adhérence de revêtements organiques minces, de peintures, de laques et/ou d'adhésifs sur ces tôles revêtues de Zn-Mg ou Zn-Al-Mg.

A cet effet, l'invention concerne un procédé selon la revendication 1.

Le procédé peut également comprendre les caractéristiques des revendications 2 à 14, prises isolément ou en combinaison.

La demande décrit également une tôle présentant deux faces 5 dont au moins l'une est revêtue par un revêtement métallique 7 comprenant entre 0,1 et 10% en poids de Mg et éventuellement entre 0,1 et 20% en poids l'Al, le reste étant du Zn, les impuretés inévitables et éventuellement un ou plusieurs éléments additionnels choisis parmi Si, Sb, Pb, Ti, Ca, Mn, Sn, La, Ce, Cr, Ni ou Bi, susceptible d'être obtenue par ce procédé.

L'invention va à présent être illustrée par des exemples donnés à titre indicatif, et non limitatif, et en référence aux figures annexées sur lesquelles :

- la figure 1 est une vue schématique en coupe illustrant la structure d'une tôle préparée par le procédé selon l'invention,
- les figures 2 et 3 montrent des résultats d'analyse par spectroscopie XPS des surfaces extérieures des revêtements métalliques.

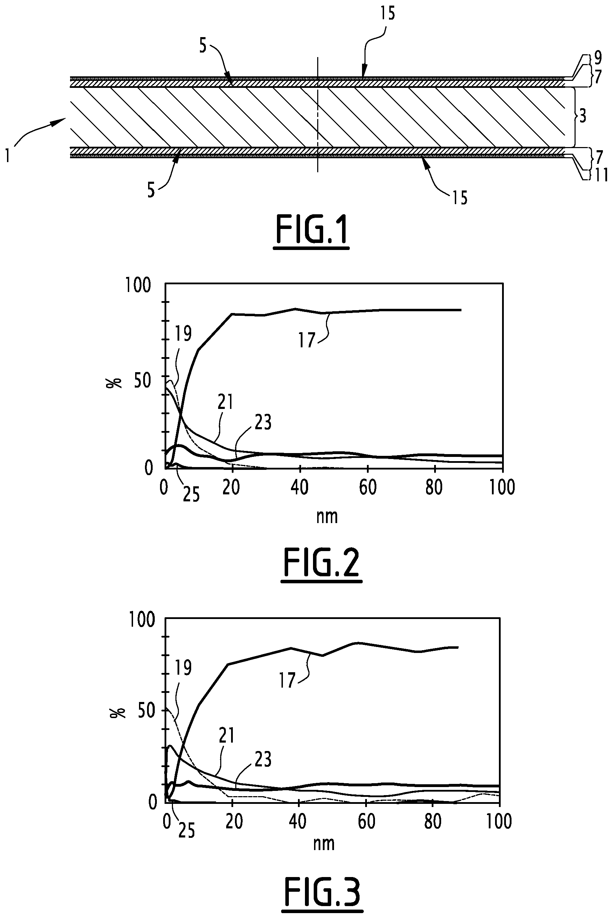

La tôle 1 de la figure 1 comprend un substrat 3 en acier recouvert sur chacune de ses deux faces 5 par un revêtement métallique 7. Les revêtements 7 sont recouverts respectivement d'un film supérieur de peinture 9 et d'un film inférieur de peinture 11. Comme la tôle préparée par le procédé selon l'invention n'est pas nécessairement recouverte de peinture, on ne sortirait pas du cadre de l'invention si le film supérieur de peinture 9 et/ou le film inférieur de peinture 11 étaient absents (variantes non représentées).

On observera que les épaisseurs relatives du substrat 3 et des différentes couches le recouvrant n'ont pas été respectées sur la figure 1 afin de faciliter la représentation.

Les revêtements 7 présents sur les deux faces 5 sont analogues et un seul sera décrit en détail par la suite. En variante (non-représentée), seule une des faces 5 présente un revêtement 7.

Le revêtement métallique 7 comprend entre 0,1 et 10% en poids, typiquement entre 0,3 et 10% en poids, notamment entre 0,3 et 4% en poids de magnésium. En dessous de 0,1% en poids de Mg, la tôle revêtue n'est pas suffisamment résistante à la corrosion et au-delà de 10% en poids de Mg, le revêtement ZnMg ou ZnMgAl s'oxyde trop et ne peut être utilisé.

Au sens de la présente demande, lorsqu'une plage de chiffre est décrite comme étant entre une borne basse et une borne haute, il est sous-entendu que ces bornes sont incluses. Par exemple un revêtement comprenant 0,1% ou 10% en poids de magnésium est inclus lorsque l'expression « Le revêtement métallique 7 comprend entre 0,1 et 10% en poids de magnésium » est utilisée.

Dans un mode de réalisation, le revêtement métallique 7 comprend de l'aluminium, typiquement entre 0,5 et 11% en poids, notamment entre 0,7 et 6% en poids, de préférence entre 1 et 6% en poids d'aluminium. Typiquement, le rapport massique entre le magnésium et l'aluminium dans le revêtement métallique 7 est strictement inférieur ou égal à 1, de préférence strictement inférieur à 1, et de préférence encore strictement inférieur à 0.9.

Les impuretés inévitables et éléments additionnels choisis parmi Si, Sb, Pb, Ti, Ca, Mn, Sn, La, Ce, Cr, Ni ou Bi présents dans le revêtement métallique 7 sont dus à la pollution du bain utilisé lors du trempage à chaud. La teneur en poids de chaque élément additionnel est inférieure à 0,3%.

Le revêtement 7 a généralement une épaisseur inférieure ou égale à 25 $\mu$m et vise de manière classique à protéger le substrat 3 contre la corrosion. Les modes de réalisation décrits ci-dessus concernant le revêtement 7 sont bien sûr applicables.

Les films de peinture 9 et 11 sont par exemple à base de polymères. Ces polymères peuvent être des polyesters ou des dérivés halogénés de polymères vinyliques tels que des plastisols, PVDF....Les films 9 et 11 ont typiquement des épaisseurs comprises entre 1 et 200 $\mu$m.

Pour réaliser la tôle 1, on peut par exemple procéder comme suit.

L'installation utilisée peut comprendre une seule et même ligne ou par exemple deux lignes différentes pour réaliser respectivement le revêtement métallique et la mise en peinture lorsque celle-ci est effectuée. Dans le cas où deux lignes différentes sont utilisées, elles peuvent être situées sur le même site ou sur des sites distincts. Dans la suite de la description, on considéra à titre d'exemple une variante où deux lignes distinctes sont utilisées.

Dans une première ligne de réalisation de revêtement métallique 7, on utilise un substrat 3 obtenu par exemple par laminage à chaud puis à froid. Le substrat 3 est sous forme d'une bande que l'on fait défiler dans un bain pour déposer le revêtement 7 par trempé à chaud.

Le bain est un bain de zinc fondu contenant du magnésium et éventuellement de l'aluminium. Le bain peut également contenir jusqu'à 0,3% en poids d'éléments optionnels additionnels tels que Si, Sb, Pb, Ti, Ca, Mn, Sn, La, Ce, Cr, Ni ou Bi. Ces différents éléments additionnels peuvent permettre, entre autres, d'améliorer la ductilité ou l'adhésion du revêtement 7 sur le substrat 3. L'homme du métier qui connaît leurs effets sur les caractéristiques du revêtement 7 saura les employer en fonction du but complémentaire recherché. Le bain peut enfin contenir des éléments résiduels provenant des lingots d'alimentation ou résultant du passage du substrat 3 dans le bain, source d'impuretés inévitables dans le revêtement 7.

Après dépôt du revêtement 7, le substrat 3 est par exemple essoré au moyen de buses projetant un gaz de part et d'autre du substrat 3.

On laisse ensuite refroidir le revêtement 7 de façon contrôlée pour qu'il se solidifie. Le refroidissement contrôlé du revêtement 7 est assuré à une vitesse de préférence supérieure ou égale à 15°C/s entre le début de la solidification (c'est-à-dire lorsque le revêtement 7 tombe juste sous la température du liquidus) et la fin de solidification (c'est-à-dire lorsque le revêtement 7 atteint la température du solidus).

Le refroidissement contrôlé du ou de chaque revêtement 7 est assuré à une vitesse de préférence supérieure à 10°C/s ou encore supérieure à 20°C/s.

En variante, l'essorage peut être adapté pour enlever le revêtement 7 déposé sur une face 5 de sorte qu'une seule des faces 5 de la tôle 1 sera en définitive revêtue par un revêtement 7.

La bande ainsi traitée peut ensuite être soumise à une étape dite de skin-pass qui permet de l'écrouir et lui conférer une rugosité facilitant sa mise en forme ultérieure.

Un film de graisse ou d'huile est alors généralement appliqué sur le revêtement 7 afin de le protéger contre la corrosion.

La bande peut éventuellement être bobinée avant d'être stockée ou envoyée vers une autre ligne de traitement de surface et éventuellement de prélaquage.

Les surfaces extérieures 15 du revêtement 7 y sont usuellement soumises à une étape de dégraissage, généralement en leur appliquant une solution aqueuse basique.

Simultanément ou ultérieurement à cette étape de dégraissage, les surfaces extérieures 15 du revêtement métallique 7 sont soumises à une étape de traitement de surface qui consiste à leur appliquer une solution aqueuse de pH de 7 à 13, notamment de 7 à 12,5, de préférence de 7 à 11,5 comprenant un agent complexant les ions magnésium dont la constante de dissociation pKd de la réaction de complexation avec le magnésium est supérieure ou égale à 2.

Le pH de la solution aqueuse comprenant l'agent complexant les ions magnésium appliquée est basique. Or, l'étape de dégraissage des surfaces extérieures 15 du revêtement 7 consiste généralement à leur appliquer une solution aqueuse basique. Ainsi, les étapes de dégraissage et d'application de la solution aqueuse de pH de 7 à 13, notamment de 7 à 12,5, de préférence de 7 à 11,5 comprenant un agent complexant les ions magnésium peuvent être réalisées simultanément. Pour mettre en oeuvre le procédé selon l'invention dans les procédés de traitement de surface existants, il suffit alors d'ajouter un agent complexant les ions magnésium dont la constante de dissociation pKd de la réaction de complexation avec le magnésium est supérieure ou égale à 2 dans la solution basique utilisée pour le dégraissage. Le procédé selon l'invention peut donc facilement être mis en oeuvre dans les lignes de traitement de surface existantes, sans qu'il soit nécessaire de modifier ces lignes en y ajoutant des étapes et des bacs de solution de traitement, ce qui est un avantage économique. En effet, l'ajout d'une étape d'application d'une solution de traitement (généralement suivie d'un rinçage) est très coûteux car, lors de la production industrielle, il est alors nécessaire de modifier toute la chaîne de traitement de surface des tôles, et toute modification de cette chaîne nécessite de tester la résistance à la corrosion des tôles revêtues obtenues à la fin de la chaîne dans le temps. Il est alors nécessaire d'attendre le résultat de ces tests (soit généralement des mois) pour pouvoir utiliser la chaine de traitement de surface de façon industrielle. Il est donc particulièrement avantageux que les étapes de dégraissage et d'application de la solution aqueuse de pH de 7 à 13, notamment de 7 à 12,5, de préférence de 7 à 11,5 comprenant un agent complexant les ions magnésium dont la constante de dissociation de la réaction de complexation avec le magnésium est supérieure ou égale à 2 puissent être réalisées simultanément.

La solution aqueuse de pH de 7 à 13, notamment de 7 à 12,5, de préférence de 7 à 11,5 comprend un agent complexant les ions magnésium dont la constante de dissociation pKd de la réaction de complexation dudit agent avec le magnésium est supérieure ou égale à 2, notamment supérieure ou égale à 3.

La formation d'un complexe à partir d'ions magnésium et d'un agent de complexation L s'écrit :

$$x Mg^{2+} + y L^{u-} \leftrightarrows [Mg_x(L)_y]^{2-yu+},$$

où x cations magnésium sont séquestrés par y agents de complexation de charge u- pour former le complexe $[Mg_x(L)_y]^{2-yu+}$.

À cette réaction est associée une constante de formation Kf qui s'écrit :

$$Kf = [Mg_x(L)_y] / [Mg]^x [L]^y,$$

et une constante de dissociation Kd qui s'écrit :

$$Kd = 1/Kf.$$

Au Kd, on associe un pKd = -log (Kd). Plus le pKd est grand, plus le complexe formé est stable. Les valeurs de pKd de la présente demande sont pour des solutions aqueuses dont la température est de 20 ou de 25°C et dont la force ionique est de 0,1 mol/L à 0,5 mol/L. Lorsque plusieurs agents de complexation L peuvent se lier à l'ion magnésium (lorsque $y/x \geq 2$), la valeur de pKd au sens de la demande est pour un seul agent de complexation L complexé à l'ion magnésium (la valeur de pKd augmente généralement avec le nombre d'agent de complexation L complexé à l'ion magnésium). Pour les agents de complexation L possédant des propriétés acide-base ($HL \rightleftarrows H^+ + L^-$), plusieurs formes de complexes avec l'ion magnésium peuvent exister (par exemple MgHL et MgL). Au sens de la présente demande, les valeurs de pKd correspondent à celles associées au complexe [agent de complexation sous forme basique / ion magnésium] (c'est-à-dire MgL), et non au complexe [agent de complexation sous forme acide / ion magnésium] (par exemple MgHL). A ce sujet, au pH de 7 à 13 de la solution aqueuse mise en oeuvre dans le procédé selon l'invention, l'agent de complexation est généralement sous forme basique, et le complexe [agent de complexation sous forme acide / ion magnésium] n'existe donc généralement pas. Les données de pKd des agents complexant fournis ci-après proviennent de l'ouvrage A. Ringbom, « Les complexes en chimie analytique » Dunod - Paris 1967.

L'agent complexant les ions magnésium est typiquement choisi parmi la glycine (pKd = 3,1), l'acide pyrophosphorique (pKd = 5,7), l'acide triphosphorique (pKd = 5,7), l'acide citrique (pKd = 2,8), l'acide oxalique (pKd = 2,4), l'acide diamino cyclohexane tétracétique (DCTA) (pKd = 10,3), l'acide diéthylènetriamine pentacétique (DTPA) (pKd = 9,3), l'acide éthylènediaminetétracétique (EDTA) (pKd = 8,7) et l'acide nitrilotriacétique (NTA) (pKd = 5,4), sous forme neutre ou de sel, et un mélange de ceux-ci, notamment choisi parmi la glycine, l'acide pyrophosphorique, l'acide diamino cyclohexane tétracétique, l'acide diéthylènetriamine pentacétique, l'acide éthylènediaminetétracétique et l'acide nitrilotriacétique, sous forme neutre ou de sel, et un mélange de ceux-ci, typiquement choisi parmi la glycine, l'acide diamino cyclohexane tétracétique, l'acide diéthylènetriamine pentacétique, l'acide éthylènediaminetétracétique et l'acide nitrilotriacétique, sous forme neutre ou de sel, et un mélange de ceux-ci, en particulier choisi parmi la glycine et l'acide pyrophosphorique, sous forme neutre ou de sel, et un mélange de ceux-ci, par exemple la glycine ou un de ses sels.

La solution aqueuse de pH de 7 à 13, notamment de 7 à 12,5, de préférence de 7 à 11,5 comprend généralement de 1 à 300 g/L, notamment de 5 g/L à 300 g/L, typiquement de 10 g/L à 300g/L, par exemple de 10 à 20 g/L d'agent complexant les ions magnésium.

La solution aqueuse comprenant un agent complexant les ions magnésium mise en oeuvre dans le procédé est basique (pH de 7 à 13, notamment de 7 à 12,5, de préférence de 7 à 11,5). Son pH est de préférence supérieur à 9, par exemple de 9 à 11, voire de 9 à 10.

Dans le procédé selon l'invention, la solution aqueuse de pH de 7 à 13, notamment de 7 à 12,5, de préférence de 7 à 11,5 comprenant un agent complexant les ions magnésium peut être appliquée à une température comprise entre 20 et 70°C. La durée d'application de la solution aqueuse peut être entre 0,5s et 40s, de préférence entre 2s et 20s.

La solution aqueuse de pH de 7 à 13, notamment de 7 à 12,5, de préférence de 7 à 11,5 comprenant un agent complexant les ions magnésium comprend généralement peu d'ions métalliques, notamment peu d'ions cobalt. Typiquement, la solution aqueuse comprend moins de 0,1 g/L, notamment moins de 0,05 g/L, par exemple moins de 0,01g/L d'ions cobalt. De préférence, la solution aqueuse est exempte d'ions cobalt. Typiquement, la solution aqueuse est exempte d'ions métalliques. La solution aqueuse basique est généralement exempte d'agent oxydant.

La solution de pH de 7 à 13, notamment de 7 à 12,5, de préférence de 7 à 11,5 comprenant un agent complexant les ions magnésium peut être appliquée par immersion, aspersion ou tout autre système. La température de la solution peut par exemple être la température ambiante ou une toute autre température et des étapes ultérieures de rinçage et/ou de séchage peuvent être utilisées.

Cette étape d'application de la solution basique comprenant un agent complexant les ions magnésium peut intervenir sur la ligne de réalisation des dépôts 7 ou sur la ligne de prélaquage.

Par « application sur les surfaces extérieures 15 du revêtement métallique 7 d'une solution aqueuse de pH de 7 à 13, notamment de 7 à 12,5, de préférence de 7 à 11,5 comprenant un agent complexant les ions magnésium», on entend que la solution aqueuse de pH de 7 à 13, notamment de 7 à 12,5, de préférence de 7 à 11,5 comprenant un agent complexant les ions magnésium est mise en contact avec les surfaces extérieures 15 du revêtement métallique 7. Il est donc sous-entendu que les surfaces extérieures 15 du revêtement métallique 7 ne sont pas recouvertes d'une couche intermédiaire (un film, un revêtement ou une solution) qui empêcherait la mise en contact de la solution aqueuse de pH de 7 à 13, notamment de 7 à 12,5, de préférence de 7 à 11,5 comprenant un agent complexant les ions magnésium avec les surfaces extérieures 15 du revêtement métallique 7.

A ce sujet, le procédé peut comprendre (ou être exempt) d'autre(s) étape(s) de traitement de surface que celui consistant à appliquer une solution aqueuse de pH de 7 à 13, notamment de 7 à 12,5, de préférence de 7 à 11,5 comprenant un agent complexant les ions magnésium (par exemple un traitement de surface par oxydation alcaline, un traitement de conversion chimique et/ou un traitement par cataphorèse). Lorsque cette(s) étape(s) de traitement de surface conduit(sent) à la formation d'une couche sur le revêtement 7, cette(ces) autre(s) étape(s) de traitement de surface est(sont) effectuée(s) simultanément ou après l'étape d'application d'une solution aqueuse de pH de 7 à 13, notamment de 7 à 12,5, de préférence de 7 à 11,5 comprenant un agent complexant les ions magnésium sur le revêtement 7, afin qu'il n'y ait pas de couche intermédiaire entre les surfaces extérieures 15 du revêtement métallique 7 et la solution aqueuse de pH de 7 à 13, notamment de 7 à 12,5, de préférence de 7 à 11,5 comprenant un agent complexant les ions magnésium.

Les éventuelles étapes de dégraissage et de traitement de surface susmentionnées peuvent comprendre d'autres sous-étapes de rinçage, de séchage....

L'application de la solution basique comprenant un agent complexant les ions magnésium peut être renforcée par l'application d'efforts mécaniques adaptés sur les surfaces extérieures 15 du revêtement métallique 7.

De tels efforts mécaniques peuvent être appliqués par une planeuse, un laminoir, par exemple de skin pass, des dispositifs de brossage, de grenaillage ...

Ces efforts mécaniques peuvent avoir pour fonction d'altérer les couches d'oxyde de magnésium ou d'hydroxyde de magnésium. Ainsi, les dispositifs de brossage et de grenaillage peuvent enlever tout ou partie de ces couches.

De même, une planeuse ou un laminoir peuvent être réglés pour déformer la tôle qui la traverse suffisamment pour créer des fissures dans les couches d'oxyde de magnésium ou d'hydroxyde de magnésium.

Les efforts mécaniques seront appliqués de préférence avant la solution basique comprenant l'agent complexant les ions magnésium ou alors qu'elle est présente sur les surfaces extérieures 15 pour favoriser l'action de la solution basique comprenant l'agent complexant les ions magnésium.

La solution basique comprenant l'agent complexant les ions magnésium peut alors être appliquée dans la planeuse ou dans le laminoir, par exemple en tant que solution de laminage.

La mise en peinture, si elle a lieu, peut ensuite être réalisée par exemple par dépôt de deux couches de peintures successives, à savoir une couche de primaire et une couche de finition, ce qui est généralement le cas pour réaliser le film supérieur 9, ou par dépôt d'une couche de peinture unique, ce qui est généralement le cas pour réaliser le film inférieur 11. D'autres nombres de couches peuvent être utilisés dans certaines variantes.

Le dépôt des couches de peinture est assuré par exemple par des vernisseurs à rouleaux.

Chaque dépôt d'une couche de peinture est généralement suivi d'une étape de cuisson dans un four.

La tôle 1 ainsi obtenue peut à nouveau être bobinée avant d'être découpée, éventuellement mise en forme et assemblée avec d'autres tôles 1 ou d'autres éléments par des utilisateurs.

L'invention repose sur la découverte inattendue que l'application sur les surfaces extérieures 15 du revêtement métallique 7 obtenu par trempage à chaud d'une solution aqueuse de pH de 7 à 13, notamment de 7 à 12,5, de préférence de 7 à 11,5 comprenant un agent complexant les ions magnésium dont la constante de dissociation pKd de la réaction de complexation avec le magnésium est supérieure ou égale à 2 permet d'améliorer la résistance à la corrosion et/ou l'adhérence de revêtements organiques minces, de peintures, de laques et/ou d'adhésifs sur les tôles revêtues obtenues, notamment en limitant voire en éliminant le phénomène de cloquage des films de peinture 9 et 11 lorsque la tôle 1 est soumise à un environnement corrosif.

Sans vouloir être liés par des théories particulières, il semblerait que :

- les oxydes et/ou hydroxydes de magnésium présents en surface du revêtement Zn-Mg ou Zn-Al-Mg seraient susceptibles de favoriser la corrosion et/ou l'apparition du phénomène de cloquage susmentionné, et
- l'application sur les surfaces extérieures 15 du revêtement métallique 7 de la solution aqueuse basique comprenant un agent complexant les ions magnésium dont la constante de dissociation pKd de la réaction de complexation avec le magnésium est supérieure ou égale à 2 permette d'éliminer au moins partiellement les oxydes et/ou hydroxydes de magnésium présents sur les surfaces extérieures 15 du revêtement métallique 7.

On entend ici par oxyde de magnésium ou hydroxyde de magnésium, des molécules de type $Mg_xO_y$, ou des molécules de type $Mg_x(OH)_y$, ou encore un mélange de ces deux types de molécules.

Des analyses par spectroscopie XPS (X ray Photoemission Spectroscopy) des surfaces extérieures 15 du revêtement 7 ont fait apparaître la présence prépondérante d'oxyde de magnésium ou d'hydroxyde de magnésium, même lorsque le revêtement 7 comprend de l'aluminium avec des teneurs en aluminium et en magnésium similaires. Pourtant, dans les revêtements habituels comprenant essentiellement du zinc et de l'aluminium en faible proportion, les surfaces extérieures des revêtements métalliques sont recouvertes d'une couche d'oxyde d'aluminium, malgré la teneur en aluminium très faible. Pour des teneurs similaires en magnésium et en aluminium, on se serait donc attendu à trouver de manière prépondérante de l'oxyde d'aluminium.

La spectroscopie XPS a aussi été employée pour mesurer l'épaisseur des couches d'oxyde de magnésium ou d'hydroxyde de magnésium présentes sur les surfaces extérieures 15 avant leur mise en peinture. Il apparaît que ces couches ont une épaisseur de quelques nm.

On notera que ces analyses par spectroscopie XPS ont été effectuées sur des échantillons de tôles 1 qui n'avaient pas été soumis à des environnements corrosifs. La formation des couches d'oxyde de magnésium ou d'hydroxyde de magnésium est donc liée au dépôt du revêtement 7.

Les figures 2 et 3 illustrent respectivement les spectres des éléments pour les niveaux d'énergie C1s (courbe 17), O1s (courbe 19), Mg1s (courbe 21), Al2p (courbe 23) et Zn2p3 (courbe 25) lors d'une l'analyse par spectroscopie XPS. Les pourcentages atomiques correspondants sont portés en ordonnée et la profondeur d'analyse en abscisse.

L'échantillon analysé sur la figure 2 correspond à un revêtement 7 comprenant 3,7% en poids d'aluminium et 3% en poids de magnésium et soumis à une étape classique de skin-pass tandis que l'échantillon de la figure 3 n'a pas été soumis à une telle étape.

Sur ces deux échantillons, on peut estimer d'après les analyses par spectroscopie XPS que l'épaisseur des couches d'oxyde de magnésium ou d'hydroxyde de magnésium est d'environ 5 nm.

Il apparaît ainsi que ces couches d'oxyde de magnésium ou d'hydroxyde de magnésium ne sont pas retirées par les étapes de skin-pass classiques, ni d'ailleurs par les traitements de surface classiques.

Non seulement l'influence néfaste supposée des oxydes et/ou hydroxydes de magnésium sur la corrosion et/ou l'adhérence de ROM, de peinture, de laque et/ou d'adhésif mais aussi leur élimination au moins partielle par application d'une solution aqueuse basique comprenant un agent complexant les ions magnésium, sont surprenantes pour l'homme du métier.

Celui-ci s'attend en effet à ce que les oxydes de zinc et d'aluminium (pour un revêtement ZnAlMg) présents en surface soient éliminés en condition basique, mais pas les oxydes de magnésium. En effet, les oxydes et/ou hydroxydes de magnésium ne se dissolvent pas (ou très peu) en condition basique, contrairement aux oxydes de zinc ou d'aluminium.

L'utilisation d'un agent complexant les ions magnésium à cette fin semble également surprenante.

La norme ISO 8407:2009 décrit qu'un traitement chimique avec une solution aqueuse de glycine à 250 g/L (qui a un pH de 6,2) permet d'éliminer les produits de corrosion du zinc et de ses alliages. Par contre, dans cette norme, le traitement chimique recommandé pour éliminer les produits de corrosion du magnésium et de ses alliages est une composition aqueuse comprenant $CrO_3$, $AgNO_3$ et $[Ba(NO_3)_2]$, qui est donc exempte d'agent complexant les ions magnésium. La norme ISO 8407:2009 ne suggère donc pas d'utiliser une solution de glycine (d'autant plus dans des conditions basiques) pour éliminer les oxydes de magnésium.

A la connaissance des inventeurs, l'art antérieur ne décrit ni ne suggère l'utilisation d'une solution basique comprenant un agent complexant les ions magnésium pour éliminer les oxydes et/ou hydroxydes de magnésium d'une tôle revêtue Zn-Mg ou Zn-Al-Mg.

Sans vouloir être liés par une théorie particulière, bien qu'en condition basique, l'équilibre de la réaction de solubilisation des hydroxydes et/ou oxydes de magnésium pour former des ions magnésium est fortement déplacé vers les hydroxydes et/ou oxydes de magnésium, il semblerait que l'agent complexant les ions magnésium dont le pKd est supérieur ou égal à 2 permette de déplacer cet équilibre vers la formation du complexe, et donc de dissoudre les oxydes et/ou hydroxydes de magnésium. L'élimination de ces oxydes et/ou hydroxydes de magnésium, et par conséquent l'amélioration de la résistance à la corrosion et/ou de l'adhérence de revêtements organiques minces, de peintures, de laques et/ou d'adhésifs sur les tôles revêtues, seraient moins efficace lorsque des agents complexant de pKd inférieur à 2 sont utilisés ou qu'une solution aqueuse de pH supérieure à 13 est utilisée. A ce sujet, une gamme de pH de 9 à 10 serait optimale pour éliminer les oxydes et/ou hydroxydes de magnésium.

Des échantillons des tôles 1 ont été préparées par le procédé selon l'invention, c'est-à-dire avec une étape application d'une solution aqueuse de pH de 7 à 13 comprenant, à titre d'agent complexant les ions magnésium, de la glycine et, à titre d'agent dégraissant du Gardoclean S5117 commercialisé par la société Chemetall pour des durées d'immersion de 20 s à une température de 50°C dans les conditions mentionnées dans le tableau suivant sur les surfaces extérieures 15 du revêtement métallique 7 de Magnelis® de 10 $\mu$m d'épaisseur. Les surfaces obtenues ont été analysées par spectroscopie optique de décharge luminescente « SDL » (en anglais « Glow Discharge Optical Emission Spectrometry » GDOES) sur un appareil LECO GDS-850A pour déterminer la quantité de magnésium en surface (tableau). Les pertes de masse des tôles revêtues ainsi traitées sont indiquées dans le tableau. Ces pertes de masse ne correspondent pas exclusivement à la masse d'oxyde et/ou d'hydroxyde de magnésium éliminés en surface. En effet, en condition basique, les oxydes de zinc et d'aluminium présents en surface sont également éliminés, ce qui ressort des résultats du test comparatif dans lequel une perte de masse est observée alors que la solution appliquée était exempte d'agent complexant le magnésium.

Tableau : Résultats de GDOES

| N° d'essai | Gardoclean S5117 (g/l) | Glycine (g/l) | Température (°C) | pH | Perte de masse (mg/m²·face) | Aire du pic Mg dans le domaine MgO (résultats SDL) | % de MgO dissous (d'après résultats SDL) |
|---|---|---|---|---|---|---|---|
| 1 (comparatif) | 20 | 0 | 50 | 12,1 | 93 | 0,98 | 0 |
| 2 | 20 | 20 | 50 | 9,1 | 302 | 0,15 | 84 |
| 3 | 45 | 20 | 50 | 10 | 296 | 0,23 | 77 |
| 4 | 45 | 20 | 50 | 11,1 | 130 | 0,31 | 68 |
| 5 | 22 | 10 | 50 | 10,7 | 42 | 0,38 | 61 |
| 6 | 22 | 10 | 50 | 9 | 393 | 0,08 | 92 |

**Revendications**

1. Procédé de préparation d'une tôle (1) comprenant un substrat (3) présentant deux faces (5) dont au moins l'une est revêtue par un revêtement métallique (7) comprenant entre 0,1 et 10% en poids de Mg et éventuellement entre 0,1 et 20% en poids l'Al, le reste du revêtement métallique étant du Zn, les impuretés inévitables et éventuellement un ou plusieurs éléments additionnels choisis parmi Si, Sb, Pb, Ti, Ca, Mn, Sn, La, Ce, Cr, Ni ou Bi, la teneur en poids de chaque élément additionnel étant inférieure à 0,3%, le procédé comprenant au moins des étapes de :

   - fourniture d'un substrat (3) en acier présentant deux faces (5) revêtu sur au moins une face (5) par un revêtement métallique (7) déposé par trempé du substrat (3) à chaud puis solidifié,
   - dégraissage des surfaces extérieures (15) du revêtement métallique (7),
   - simultanément ou ultérieurement au dégraissage, application sur les surfaces extérieures (15) du revêtement métallique (7) d'une solution aqueuse de pH de 7 à 13 comprenant :

      - un agent complexant les ions magnésium dont la constante de dissociation pKd de la réaction de complexation avec le magnésium est supérieure ou égale à 2, et
      - moins de 1 g/L d'ions cobalt.

2. Procédé selon la revendication 1, dans lequel l'étape de fourniture du substrat (3) en acier présentant deux faces (5) revêtu sur au moins une face (5) par un revêtement métallique (7) déposé par trempé du substrat (3) à chaud puis solidifié comprend les sous-étapes de :

- fourniture d'un substrat (3) en acier présentant deux faces (5),
- dépôt d'un revêtement métallique (7) sur au moins une face (5) par trempé du substrat (3) à chaud,
- solidification du revêtement métallique (7).

3. Procédé selon la revendication 1 ou 2, dans lequel la solution aqueuse a un pH de 7 à 11,5.

4. Procédé selon l'une quelconque des revendications 1 à 3, dans lequel la solution aqueuse est exempte d'ions cobalt.

5. Procédé selon l'une quelconque des revendications 1 à 4, dans lequel la solution aqueuse a un pH de 7 à 11,5 et est exempte d'ions cobalt.

6. Procédé selon l'une quelconque des revendications 1 à 5, dans lequel le revêtement métallique (7) comprend entre 0,3 et 10%, de préférence entre 0,3 et 4%, en poids de magnésium.

7. Procédé selon l'une des revendications précédentes, dans lequel le revêtement métallique (7) comprend entre 0,5 et 11%, notamment entre 0,7 et 6%, de préférence entre 1 et 6% en poids d'aluminium.

8. Procédé selon l'une des revendications précédentes, dans lequel le rapport massique entre le magnésium et l'aluminium dans le revêtement métallique (7) est strictement inférieur ou égal à 1, de préférence strictement inférieur à 1, et de préférence encore strictement inférieur à 0,9.

9. Procédé selon l'une des revendications précédentes, dans lequel l'agent complexant les ions magnésium est choisi parmi la glycine, l'acide pyrophosphorique, l'acide triphosphorique, l'acide citrique, l'acide oxalique, l'acide diamino cyclohexane tétracétique, l'acide diéthylènetriamine pentacétique, l'acide éthylènediaminetétracétique et l'acide nitrilotriacétique, sous forme neutre ou de sel, et un mélange de ceux-ci.

10. Procédé selon la revendication 9, dans lequel l'agent complexant les ions magnésium est choisi parmi la glycine, l'acide pyrophosphorique, l'acide diamino cyclohexane tétracétique, l'acide diéthylènetriamine pentacétique, l'acide éthylènediaminetétracétique et l'acide nitrilotriacétique, sous forme neutre ou de sel, et un mélange de ceux-ci, de préférence choisi parmi la glycine, l'acide diamino cyclohexane tétracétique, l'acide diéthylènetriamine pentacétique, l'acide éthylènediaminetétracétique et l'acide nitrilotriacétique, sous forme neutre ou de sel, et un mélange de ceux-ci.

11. Procédé selon la revendication 10, dans lequel l'agent complexant les ions magnésium est la glycine ou un de ses sels.

12. Procédé selon l'une des revendications précédentes, dans lequel la solution aqueuse comprend de 1 à 300 g/L, de préférence de 10 à 20 g/L d'agent complexant les ions magnésium.

13. Procédé selon l'une des revendications précédentes, dans lequel la solution aqueuse a un pH de 9 à 11, de préférence de 9 à 10.

14. Procédé selon l'une des revendications précédentes, dans lequel la solution aqueuse est appliquée à une température comprise entre 20 et 70°C.


**Patentansprüche**

1. Verfahren zur Herstellung eines Blechs (1), welches ein Substrat (3) aufweist, das zwei Flächen (5) aufweist, von denen mindestens eine mit einer metallischen Beschichtung beschichtet ist, welche zwischen 0,1 und 10 Gew.-% an Mg und gegebenenfalls zwischen 0,1 bis 20 Gew.-% an Al aufweist, wobei der Rest der metallischen Beschichtung aus Zn, aus unvermeidbaren Unreinheiten und gegebenenfalls aus einem oder mehreren zusätzlichen Elementen, welche aus Si, Sb, Pb, Ti, Ca, Mn, Sn, La, Ce, Cr, Ni oder Bi ausgewählt sind, wobei der Gewichtsgehalt jedes zusätzlichen Elements kleiner ist als 0,3%, ist, wobei das Verfahren zumindest die Schritte aufweist:

- Bereitstellen eines Substrats (3) aus Stahl mit zwei Flächen (5), welches auf zumindest einer Fläche (5) mit einer metallischen Beschichtung (7) beschichtet ist, welche durch Heißtauchen des Substrats (3) aufgebracht ist und anschließend erstarrt ist,
- Entfetten der Außenoberflächen (15) der metallischen Beschichtung (7),
- gleichzeitig mit oder anschließend an das Entfetten, Aufbringen, auf die Außenoberflächen (15) der metallischen Beschichtung (7), einer wässrigen Lösung mit einem pH-Wert von 7 bis 13, welche aufweist:

- einen Magnesium-Ionen-Komplexbildner, dessen Dissoziationskonstante pKd der Reaktion zur Komplexbildung mit dem Magnesium größer oder gleich 2 ist, und
- weniger als 1 g/L an Kobalt-Ionen.

2. Verfahren gemäß dem Anspruch 1, wobei der Schritt des Bereitstellens des Substrats (3) aus Stahl mit zwei Flächen (5), welches auf zumindest einer Fläche (5) mit einer metallischen Beschichtung (7), welche durch Heißtauchen des Substrats (3) aufgebracht ist und anschließend erstarrt ist, beschichtet ist, die Unterschritte aufweist:

- Bereitstellen eines Substrats (3) aus Stahl, welches zwei Flächen (5) aufweist,
- Aufbringen einer metallischen Beschichtung (7) auf mindestens eine Fläche (5) durch Heißtauchen des Substrats (3),
- Erstarren der metallischen Beschichtung (7).

3. Verfahren gemäß dem Anspruch 1 oder 2, wobei die wässrige Lösung einen pH-Wert von 7 bis 11,5 aufweist.

4. Verfahren gemäß einem der Ansprüche 1 bis 3, wobei die wässrige Lösung frei von Kobalt-Ionen ist.

5. Verfahren gemäß einem der Ansprüche 1 bis 4, wobei die wässrige Lösung einen pH-Wert von 7 bis 11,5 aufweist und frei von Kobalt-Ionen ist.

6. Verfahren gemäß einem der Ansprüche 1 bis 5, wobei die metallische Beschichtung (7) zwischen 0,3 und 10 Gew.-%, vorzugsweise zwischen 0,3 und 4 Gew.-%, an Magnesium aufweist.

7. Verfahren gemäß einem der vorhergehenden Ansprüche, wobei die metallische Beschichtung (7) zwischen 0,5 und 11 Gew.-%, insbesondere zwischen 0,7 und 6 Gew.-%, vorzugsweise zwischen 1 und 6 Gew.-%, an Aluminium aufweist.

8. Verfahren gemäß einem der vorhergehenden Ansprüche, wobei das Massenverhältnis zwischen dem Magnesium und dem Aluminium in der metallischen Beschichtung (7) streng kleiner oder gleich 1, bevorzugt streng kleiner 1, und noch bevorzugter streng kleiner 0,9, ist.

9. Verfahren gemäß einem der vorhergehenden Ansprüche, wobei der Magnesium-Ionen-Komplexbildner aus dem Glyzin, der Pyrophosphorsäure, der Triphosphorsäure, der Zitronensäure, der Oxalsäure, der Diaminocyclohexantetraessgisäure, der Diethylentriaminpentaessigsäure, der Ethylendiamintetraessigsäure und der Nitrilotriessigsäure, in neutraler oder Salz-Form, und eine Mischung von diesen ausgewählt ist.

10. Verfahren gemäß dem Anspruch 9, wobei der Magnesium-Ionen-Komplexbildner aus dem Glyzin, der Pyrophosphorsäure, der Diaminocyclohexantetraessgisäure, der Diethylentriaminpentaessigsäure, der Ethylendiamintetraessigsäure und der Nitrilotriessigsäure, in neutraler oder Salz-Form, und eine Mischung von diesen ausgewählt ist, vorzugsweise aus dem Glyzin, der Diaminocyclohexantetraessgisäure, der Diethylentriaminpentaessigsäure, der Ethylendiamintetraessigsäure und der Nitrilotriessigsäure, in neutraler oder Salz-Form, und eine Mischung von diesen ausgewählt ist.

11. Verfahren gemäß dem Anspruch 10, wobei der Magnesium-Ionen-Komplexbildner das Glyzin oder eines seiner Salze ist.

12. Verfahren gemäß einem der vorhergehenden Ansprüche, wobei die wässrige Lösung von 1 bis 300 g/L, vorzugsweise von 10 bis 20 g/L, an Magnesium-Ionen-Komplexbildner aufweist.

13. Verfahren gemäß einem der vorhergehenden Ansprüche, wobei die wässrige Lösung einen ph-Wert von 9 bis 11, vorzugsweise von 9 bis 10, hat.

14. Verfahren gemäß einem der vorhergehenden Ansprüche, wobei die wässrige Lösung bei einer Temperatur, welche zwischen 20 und 70°C liegt, aufgebracht wird.

**Claims**

1. A method for preparing a metal sheet (1) comprising a substrate (3) having two faces (5), at least one of which is coated with a metal coating (7) comprising between 0.1 and 10% by weight of Mg and optionally between 0.1 and 20% by weight of Al, the remainder of the metal coating being Zn, the inevitable impurities and optionally one or several additional elements selected from Si, Sb, Pb, Ti, Ca, Mn, Sn, La, Ce, Cr, Ni or Bi, the weight content of each additional optional elements being lower than 0.3%, the method comprising at least steps of:

   - providing a steel substrate (3) having two faces (5) coated on at least one face (5) by a metal coating (7) deposited by hot dipping of the substrate (3) then solidified,
   - degreasing the outer surfaces (15) of the coating (7),
   - simultaneously or subsequently to degreasing, applying on the outer surfaces (15) of the metal coating (7) an aqueous solution with a pH from 7 to 13 comprising:

      - an agent complexing magnesium ions, for which the dissociation constant pKd of the complexing reaction with magnesium is greater than or equal to 2, and
      - less than 1 g/L of cobalt ions.

2. The method according to claim 1, wherein the step of providing a steel substrate (3) having two faces (5) coated on at least one face (5) by a metal coating (7) deposited by hot dipping of the substrate (3) then solidified comprises the sub-steps of:

   - providing a steel substrate (3) having two faces (5),
   - depositing a metal coating (7) on at least one face (5) by hot dipping of the substrate (3),
   - solidifying the metal coating (7).

3. The method according to claim 1 or 2, wherein the aqueous solution has a pH from 7 to 11.5.

4. The method according to any one of claims 1 to 3, wherein the aqueous solution is free of cobalt ions.

5. The method according to any of claims 1 to 4, wherein the aqueous solution has a pH from 7 to 11.5 and is free of cobalt ions.

6. The method according to any of claims 1 to 5, wherein the metal coating (7) comprises between 0.3 and 10% by weight, preferably between 0.3 and 4% by weight, of magnesium.

7. The method according to one of the preceding claims, wherein the metal coating (7) comprises between 0.5 and 11% by weight, notably between 0.7 and 6% by weight, preferably between 1 and 6% by weight, of aluminum.

8. The method according to one of the preceding claims, wherein the mass ratio between the magnesium and the aluminium in the metal coating (7) is strictly less than or equal to 1, preferably strictly less than 1, and still preferably strictly less than 0.9.

9. The method according to one of the preceding claims, wherein the agent complexing magnesium ions is selected from glycine, pyrophosphoric acid, triphosphoric acid, citric acid, oxalic acid, diamino cyclohexane tetraacetic acid, diethylenetriamine pentacetic acid, ethylenediaminetetraacetic acid and nitrilotriacetic acid, in a neutral or salt form, and a mixture thereof.

10. The method according to claim 9, wherein the agent complexing magnesium ions is selected from glycine, pyrophosphoric acid, diamino cyclohexane tetraacetic acid, diethylenetriamine pentacetic acid, ethylenediaminetetraacetic acid and nitrilotriacetic acid, in neutral or salt form, and a mixture thereof, preferably selected from glycine, diamino cyclohexane tetraacetic acid, diethylenetriamine pentacetic acid, ethylenediaminetetraacetic acid and nitrilotriacetic acid, in neutral or salt form, and a mixture thereof.

11. The method according to claim 10, wherein the agent complexing magnesium ions is glycine or one of its salts.

**12.** The method according to one of the preceding claims, wherein the aqueous solution comprises from 1 to 300 g/L, preferably from 10 to 20 g/L, of the agent complexing magnesium ions.

**13.** The method according to one of the preceding claims, wherein the aqueous solution has a pH from 9 to 11, preferably from 9 to 10.

**14.** The method according to one of the preceding claims, wherein the aqueous solution is applied at a temperature comprised between 20 and 70°C.

## FIG.1

## FIG.2

## FIG.3

**EP 2 956 563 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1857567 A
- JP 2002097559 A
- EP 2458031 A
- JP 2009191317 A

**Littérature non-brevet citée dans la description**

- **A. RINGBOM.** *Les complexes en chimie analytique,* 1967